# EUROPEAN PATENT APPLICATION

(11) **EP 4 703 994 A1**
(43) Date of publication of application: **04.03.2026**
(21) Application number: 24196503.7
(22) Date of filing: 26.08.2024
(51) Int. Cl.: G06Q 10/0639, G09B 9/00, G09B 19/00

(54) **METHOD FOR AUTOMATICALLY GENERATING IMMERSIVE TRAINING SCENARIOS FOR WORKERS IN AN INDUSTRIAL ENVIRONMENT FOR HAZARDOUS EVENTS IN A COMPUTER SIMULATED ENVIRONMENT**

(71) Applicant: Siemens Aktiengesellschaft, 80333 München (DE)
(72) Inventor: DEB, Pallav Kumar, 781028 Guwahati, Assam (IN); KUNDU, Ricktam, 110045 New Delhi, Delhi (IN); RAJ, Arun, 635110 Hosur, Tamil Nadu (IN); SINGH, Himanshu Kumar, 560100 Bangalore (IN)
(74) Representative: HKW Intellectual Property PartG mbB

(57) **Abstract**

Disclosed is system (100) and method (400) for automatically generating immersive training scenarios for workers (118-1 to 118-N) in industrial environment for hazardous events in a computer simulated environment (102). The method comprises acquiring, by processing unit (302), information pertaining to operation of assets and related anomalies and hazards in industrial environment for which training scenarios are to be simulated, loading simulation sequence of industrial environment comprising assets (106-1 to 106-N) operating at ideal behavior, wherein simulation sequence executes a first set of tasks on virtual assets (106-1 to 106-N) within ideal behavior, defining one or morse sequence of events that lead to hazardous event in industrial environment based on acquired information, determining second set of tasks to be executed in loaded simulation sequence, simulating second set of tasks in loaded simulation sequence, and generating immersive training scenario in computer simulated environment based on execution of the first set of tasks and the second set of tasks in loaded simulation sequence.

## Description

The present invention relates to a field of computer simulated environments and more particularly relates to a system and method for automatically generating immersive training scenarios for workers in an industrial environment for hazardous events in a computer simulated environment.

Industrial environments include plurality of machines or assets in an automated factory, or IoT devices interacting with one another. Industrial environments thus often include multiple interconnected components in signal communication with each other, either directly or across a network. Personnel safety is increasingly identified as the primary force in decision making in industrial applications. All production and financial targets, in industries ranging from petrochemicals and refining to the software industry, are secondary to safety concerns. Thus, it is increasingly comment for employees, contractors, and visitors to be briefed on aware safety risks present at a work location.

Many industries are also required to comply with safety standards like OSHAS 18001/BSC. OHSAS 18001 is an internationally recognized occupational, health, and safety management system series standard. Requirements for OHSAS 18001 Occupation health and safety management system include formulation of an Occupational, Health and Safety Management System (OHSMS) with the establishment of an occupational, health and safety (OHS) manual in which the scope of OHSMS is determined; establish an occupational, health, and safety policy and OHS objectives and programs; ensure document and record control; implement and maintain a procedure to identify hazards, assess risk and determine controls in the work place; ensure applicable occupational, health, and safety legislation is identified, communicated within and compliance assessed; define resources, roles, responsibilities, accountability, and authority with regard to the OHSMS; implement an adequate occupational, health, and safety communication, participation, and consultation process; maintain good operational control; plan emergency preparedness and response; meet strict criteria in relation to incident investigation; identify and deal with OHS non conformities by applying corrective and preventative action; monitor and measure the occupational, health, and safety performance of the organization; and audit the system and review the system at a management level periodically.

In certain industries, training mechanisms are used to train people to identify and avoid potential hazards. These training mechanisms range from showing presentations and making people aware of scenarios to live training exercises (e.g., mock drills, firefighting training, etc.). In prior approaches, there is no means for evaluating the trainee's behavior. As such, it can be difficult to evaluate if a trainee truly understands the risks associated with the potential hazard.

There are two particular categories in the work force that are uniquely prone to work related safety hazards: people who are new to the work place (i.e., those with less experience), and people who have worked around the hazard for an extended period of time (such people have the knowledge to correctly answer safety evaluation questions, but may not adhere to safe behavior standards in practice).

Each instrument in a factory may entail its own adversity, which consequently requires tailored responses. In such conditions, preparing drills for the workers and preparing them for unlikely events is challenging. Furthermore, designing and development of the training requires an expert who understands the machinery and underlying risks in order to avoid corner cases. In addition to the identification and creation of such trainings, actual depiction of the scenarios to give a real-life experience to the workers is a non-trivial task.

Accordingly, there is a need for systems and methods that create real life-like scenarios that do not expose the trainee to a real hazard, while also providing the ability to monitor and evaluate the response of an individual to such situations.

In light of the above, there exists a need for automatically generating immersive training scenarios for workers in an industrial environment for hazardous events in a computer simulated environment.

Therefore, it is an object of the present invention to provide a system, apparatus and method for automatically generating immersive training scenarios for workers in an industrial environment for hazardous events in a computer simulated environment.

Throughout the present disclosure, the term "industrial environment" may refer to plurality of industrial assets connected with each other to achieve a function. The industrial environment may be comprised of industrial assets such as industrial machines, industrial devices, industrial controllers, and so forth.

Throughout the present disclosure, the term "one or more assets" as used herein refers to any device, system, instrument, or machinery manufactured or used in an industry that may be employed for performing an operation. Example of assets include any machinery in an industrial environment or technical installation/facility such as motors, gears, bearings, shafts, switchgears, rotors, circuit breakers, protection devices, remote terminal units, transformers, reactors, disconnectors, gear-drive, gradient coils, magnets, radio frequency coils etc. Exemplary technical systems include turbines, large drives, Magnetic Resonance Imaging (MRI) scanner, etc. Example facility/technical installation may be a complex industrial set-up with a plurality of assets such as a power plant, wind farm, power grid, manufacturing facility, process plants and so on.

Throughout the present disclosure, the term "computed simulated environment" as used herein refers to three-dimensional (3D) representation of a real or physical world. It can be understood as a virtual world. The computer-simulated environment is accessible by a user, i.e., it is accessible from the real/physical world. This comprises data exchange between the computer-simulated environment and the real/physical world. In particular, the computer-simulated environment can be understood as the "metaverse". It is also possible to interact with the computer-simulated environment, i.e., to influence or use processes, components and/or functions in the computer-simulated environment. Therefore, processes in the computer-simulated environment may have direct influence on processes in the real/physical world, e.g., by modelling control processes virtually.

For example, it is possible that a user can access the computer-simulated environment via an interface, e.g., a virtual reality (VR) or augmented reality (AR) interface. The counterpart of the computer-simulated environment does not necessarily have to exist but can be, for example, a 3D model. It is also possible that physical forces and phenomena, e.g., gravity, are represented in a different way in the computer-simulated environment than in the real world, e.g., gravitational acceleration. For the purpose of this invention, the metaverse is comprised of a plurality of digital twins corresponding to real-world one or more assets in the industrial environment.

The metaverse may comprise a plurality of computer-simulated components. The computer simulated components can, for example, be understood as a representation, in particular, a 3D representation, of a real or physical component. A component can, for example, be a room, a building, an item, or an object. The computer-simulated component can have different functionalities/features, e.g., an access interface. The computer-simulated component further comprises data that are component-specific, e.g., sensor data of a virtual sensor, that can be retrieved, for example, via the access interface. An access to a computer-simulated component can, for example, comprise usage, modification, connection to other computer-simulated components, etc. The computer-simulated component can interact with the computer-simulated environment. For the purpose of this invention, the computer-simulated component may be a digital twin or a plurality of digital twins in the computer simulated environment or metaverse.

The metaverse can be realized by a hosting environment. The hosting environment can be,, for example, be implemented as a cloud environment, an edge-cloud environment and/or on specific devices, e.g., mobile devices.

Throughout the present disclosure, the term "distributed network" as used herein refers to a network system providing decentralized control and storage of the ledger at the one or more entities (which may be considered "nodes" of the system). The number of "nodes" may be fixed or vary with time and increasing or decreasing the number of "nodes" may impact the performance and/or security of the system. The ledger copies stored and maintained at each "node" provide cross-validation with one another in the event of conflicts between ledgers, and various cryptographic and/or hashing algorithms may be utilized during the generation, updating, linking, and so on, of ledger entries such that ledger entries have increased resiliency to unauthorized tampering or modification.

Throughout the present disclosure, the term "digital twin/virtual asset" as used herein refers to digital copy of a physical item (e.g., a real machine) that is created to support data access, command and control, remote configuration, as well as simulation and analytics. A virtual asset is commonly created simultaneously with the real devices and systems, such as processing equipment and sensors in the facility. Once created by a specific vendor for their own specific equipment, the virtual asset can be used to represent the machine in a digital representation of a real world system. The DT is created such that it is identical in form and behavior to the corresponding machine, virtual assets may be supported by the vendors' own IIoT infrastructure. Thus, each virtual asset is associated with one and only one asset. A customer deploying IIoT may thus end up having many such virtual assets deployed on a wide variety of infrastructures because IIoT vendors generally host their solutions on a variety of different cloud platforms (e.g. Microsoft AZURE, Amazon AWS, their own- or third-party data center), and may use a wide variety of open source and other components to create their digital twin/ virtual asset solutions.

Throughout the present disclosure, the term "simulation sequence" refers to refers to a series of steps or actions taken to model and analyze the behavior of a system or process over time using computer-based simulations. This sequence involves creating a virtual representation of the one or more assets running the simulation and interpreting the results to gain insights or make decisions. In a specific embodiment, the assets are trained in a simulation environment for which a large number of simulation scenarios are generated.

Throughout the present disclosure, the term "hazardous events" refers to an emergency event which occurs suddenly and poses a risk of injury, illness, or damage to workers, equipment, or the environment. Identifying and understanding these hazards is crucial for maintaining a safe and healthy workplace. In some scenarios, hazardous events are divided into four levels according to factors such as the property, the severity, the controllability, the influence range and the like of the hazardous event according to the national emergency public event general emergency plan: class i (extra heavy), class ii (heavy), class iii (larger) and class iv (general). According to the occurrence process, property and mechanism of the emergent common events, the emergent events are divided into four types: natural disasters, accident disasters, public health events, social security events and the like. The hazardous events refers to different levels and different types of hazardous events which occur when people perform production activities, such as a laboratory explosion scene, a gas station fire scene, a high-altitude suspension operation high-drop scene, a welding operation electric shock scene, a gas and gas leakage scene for catering, a power distribution room fire scene, a mechanical injury scene of a common product warehouse, an explosion scene of a toxic commodity warehouse, a hazardous chemical leakage scene of a corrosive commodity warehouse, a mechanical injury scene of a refrigeration house, a fire scene of an old-age institution, a fire scene of a business supermarket, a poisoning scene of a liquid ammonia filling station, a liquid ammonia transportation leakage scene and the like

Throughout the present disclosure, the term "training scenarios" or "training simulation scenarios" refers to structured exercises that replicate real-world situations in a controlled computer simulated environment. The training simulation scenarios are designed to help workers practice and improve their skills, knowledge, and decision-making abilities without the risks associated with actual operations. These scenarios are tailored to specific tasks or hazards found in the workplace and are essential for effective training programs. The training simulation scenarios are designed in a manner such that the workers have an immersive and realistic experience of the hazardous event and can improve their skills based on the performance analysis. In an example, the different training scenarios needs to be carried out on each emergency scene, environmental scenes, character roles, equipment facilities, animations, special effects and the like are researched and developed according to emergency knowledge contents, different emergency scenes are loaded according to business needs, and a practical training environment with strong immersion and strong interactivity is constructed.

Throughout the present disclosure, the term "one or more sensors" refers to electronic devices that acquire data pertaining to user behavior during training in the computer simulated environment. The one or more sensors can either be installed in the user device or outside of the user device.

The devices comprise sensors to track users' movements, gestures, and interactions, as well as to provide environmental feedback for a more immersive experience. The one or more sensors include wearable sensors such as heart rate monitors for tracking heart rate and assess stress levels, accelerometers and gyroscopes for measuring movement, posture, and physical activity of the workers, electrodermal activity (EDA) sensors for monitoring skin conductance and assess physiological responses to stress and engagement, temperature sensors for monitoring body temperature and identify signs of physical stress of workers in the training session. The one or more sensors include eye-tracking sensors such as eye-tracking cameras for monitoring where the worker is looking, measuring focus and attention, pupil dilation sensors for assessing engagement and cognitive load by tracking changes in pupil size for workers in the training session. The one or more sensors include hand and gesture tracking sensors such as motion capture gloves for tracking hand movements and gestures, ensuring correct handling of tools and equipment in the training session, kinetic sensors for capturing full-body movements and gestures, used in computer simulated environments. The one or more sensors include sensors integrated in the AR/VR headset such as integrated motion sensors for tracking head movements and orientation in virtual environments, and positional tracking systems for monitoring the worker's position and movement within the simulated training session. The one or more sensors include environmental sensors such as proximity sensors for detecting the distance between the worker and potential hazards or objects in the environment, and pressure sensors for measuring force applied on tools or machinery, ensuring correct operation. The one or more sensors include audio sensors such as microphones for capturing verbal communication and assess clarity and effectiveness, noise dosimeters for measuring exposure to noise levels and ensure compliance with safety standards. The one or more sensors include video cameras such as high-resolution cameras: for record training sessions for later analysis of behavior and actions. The one or more sensors include biometric sensors such as fingerprint scanners for ensuring the identity of the worker participating in the training, facial recognition cameras for monitoring facial expressions and emotional responses. The one or more sensors include smart PPE (Personal Protective Equipment), smart helmets, smart vests with built-in sensors. The one or more sensors include haptic feedback devices for providing tactile feedback during training, enhancing realism and engagement.

Throughout the present disclosure, the term "distributed database" as used herein refers to a decentralized storage system of the ledger at the one or more user devices (which may be considered "nodes" of the system) for storing incident information from various sites. The number of "nodes" may be fixed or vary with time and increasing or decreasing the number of "nodes" may impact the performance and/or security of the system. The ledger copies stored and maintained at each "node" provide cross-validation with one another in the event of conflicts between ledgers, and various cryptographic and/or hashing algorithms may be utilized during the generation, updating, linking, and so on, of ledger entries such that ledger entries have increased resiliency to unauthorized tampering or modification

Throughout the present disclosure, the term "database" refers to a storage unit having stored the incident report from various sites. The database may be a structured or non-structured collection of data or information stored in a computer-readable format. The database comprises one or more tables, each consisting of rows and columns, where data is organized, stored, and managed. The data within the database can include text, numbers, images, audio, video, or any other form of electronic data. The database is designed to efficiently store, retrieve, and manipulate large volumes of data, enabling rapid access and retrieval of information for various applications. It provides a centralized repository for organizing and managing data, facilitating data integrity, consistency, and security. The data within the database can be accessed, modified, or queried through a database management system (DBMS), which provides a set of software tools and interfaces to interact with the database. The DBMS allows users or applications to perform operations such as inserting, updating, deleting, or searching for data within the database which may be of various types, including but not limited to relational databases, NoSQL databases, distributed databases, in-memory databases.

Throughout the present disclosure, the term "workers" as used herein refers to any person, avatar, virtual assistant, or any other device or system participating in the training session in the computer simulated environment.

The object of the present invention is achieved by a method for automatically generating immersive training scenarios for workers in an industrial environment for hazardous events in a computer simulated environment. The method comprising acquiring, by a processing unit, information pertaining to operation of assets and related anomalies and hazards in the industrial environment for which training scenarios are to be simulated. The method comprises loading a simulation sequence of the industrial environment comprising one or more equipment operating at an ideal behavior, wherein the simulation sequence executes a first set of tasks on the one or more equipment within ideal behavior. The method comprises defining one or morse sequence of events from the acquired data that that lead to a hazardous event in the industrial environment. The method comprising determining a second set of tasks to be executed in the loaded simulation sequence. Herein, the second set of tasks are based on the defined sequence of events that lead to a hazardous event in the industrial environment. The method comprises simulating the second set of tasks in the loaded simulation sequence. The method comprises generating an immersive training scenario in the computer simulated environment based on the execution of the first set of tasks and the second set of tasks. Herein, the second set of tasks are initiated by workers during the execution of the training scenarios during a training session in the computer simulated environment.

According to an embodiment, the method further comprises determining one or more actions to be executed by the workers that would contain the hazardous event. The method further comprises assigning a positive reward for a particular worker in the training scenario that executed the said one or more actions.

According to an embodiment, the method further comprises determining one or more actions to be executed by the workers that would escalate the hazardous event. The method further comprises assigning a negative reward for a particular worker in the training scenario that executed the said one or more actions.

According to an embodiment, the method further comprises acquiring information pertaining to performance of each of the workers in the training session using one or more sensors. The method further comprises generating a detailed report of a performance and behavior of each of the workers participating in the training scenario based on the received positive rewards or negative rewards and the data acquired from the one or more sensors.

According to an embodiment, the information pertaining to operation of assets and related anomalies and hazards in the industrial environment is retrieved from a database.

According to an embodiment, the information pertaining to operation of assets and related anomalies and hazards in the industrial environment is retrieved from a distributed database, wherein the distributed database is a blockchain configured to store information pertaining to operation of assets and related anomalies and hazards in the industrial environment from multiple trusted sources.

According to an embodiment, the method further comprises identifying new one or more sequence of events and corresponding third set of tasks to be executed in the loaded simulation sequence, wherein the new one or more sequence of events are the events not known/present/saved in the database or the distributed database.

According to an embodiment, the method further comprises generating an updated immersive training scenario in the computer simulated environment based on the execution of the second set of tasks and the third set of tasks.

The object of the invention is also achieved by an apparatus for automatically generating immersive training scenarios for workers in an industrial environment for hazardous events in a computer simulated environment. The apparatus comprises one or more processing units, memory communicatively coupled to the one or more processing units. The memory comprises a module stored in the form of machine-readable instructions executable by the one or more processing units. The module is configured to perform the aforementioned method steps.

The object of the invention is also achieved by a system for automatically generating immersive training scenarios for workers in an industrial environment for hazardous events in a computer simulated environment. The system comprises a computer simulated environment rendering one or more training scenarios. Herein, each of the virtual assets are associated with one or more assets in the industrial environment. The system further comprises the apparatus as mentioned above. The apparatus is communicatively coupled to the computer simulated environment. The apparatus is configured for automatically generating immersive training scenarios for workers in an industrial environment for hazardous events according to the aforementioned method steps.

The object of the invention is also achieved by a computer program product comprising machine readable instructions, that when executed by one or more processing units, cause the one or more processing units to perform the aforementioned method steps.

The above-mentioned attributes, features, and advantages of this invention and the manner of achieving them, will become more apparent and understandable (clear) with the following description of embodiments of the invention in conjunction with the corresponding drawings. The illustrated embodiments are intended to illustrate, but not limit the invention.
FIG 1 illustrates a block-diagram of a system for automatically generating immersive training scenarios for workers in an industrial environment for hazardous events in a computer simulated environment, in accordance with an embodiment of the present invention;
FIG 2 is a block diagram of an exemplary distributed ledger implemented for automatically generating immersive training scenarios for workers in an industrial environment for hazardous events in a computer simulated environment., according to an embodiment of the present invention;
FIG 3 is a block diagram of an exemplary apparatus for automatically generating immersive training scenarios for workers in an industrial environment for hazardous events in a computer simulated environment., according to an embodiment of the present invention; and
FIG 4 is a flowchart depicting steps of a method for automatically generating immersive training scenarios for workers in an industrial environment for hazardous events in a computer simulated environment, according to an embodiment of the present invention.

Hereinafter, embodiments for carrying out the present invention are described in detail. The various embodiments are described with reference to the drawings, wherein like reference numerals are used to refer to like elements throughout. In the following description, for purpose of explanation, numerous specific details are set forth in order to provide a thorough understanding of one or more embodiments. It may be evident that such embodiments may be practiced without these specific details.

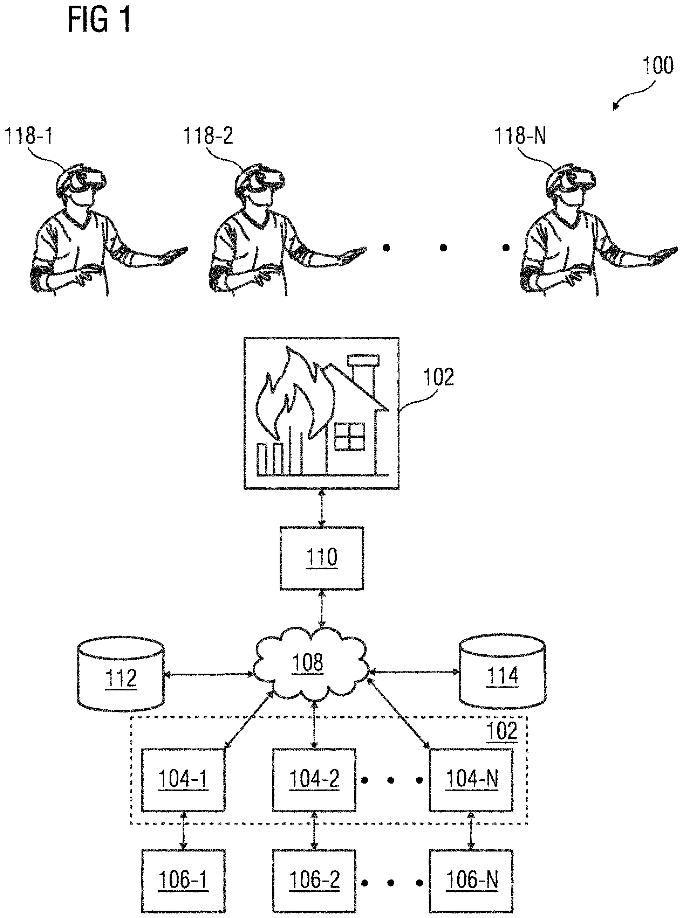

FIG 1 is a block diagram of a system 100 for automatically generating immersive training scenarios for workers in an industrial environment for hazardous events in a computer simulated environment, according to an embodiment of the present invention. The system 100 comprises a computer simulated environment 102 hosting a plurality of virtual assets 104-1 to 104-N, one or more assets 106-1 to 106-N corresponding to each virtual asset 104-1 to 104-N, and an apparatus 110 communicating over a communication network 108. The system also comprises a local database 112 and a distributed database 114. In particular, the plurality of virtual assets 104-1 to 104-N corresponding to one or more assets 106-1 to 106-N are collaborating with one another in the metaverse to realize the virtual asset or an industrial digital twin. The one or more assets may be associated with a client device (not shown). Non-limiting examples of client devices include, personal computers, workstations, personal digital assistants, human machine interfaces.

The client device may enable an owner or operator of the one or more assets to view digital certificates, permissions, access requests etc. associated therewith.

The computer simulated environment 102 is a three-dimensional (3D) representation of a real or physical world. It can be understood as a virtual world representing one or more assets 104-1 to 104-N of the real-world such as machines, robots, conveyors, cranes, drills, etc.

The computer-simulated environment 102 is accessible by a user, i.e., it is accessible from the real/physical world. In particular, the computer-simulated environment 102 can be understood as the "metaverse" or sometimes referred to as the "industrial metaverse" hereinafter. It is also possible to interact with the computer-simulated environment 102, i.e., to influence or use processes, components and/or functions in the computer-simulated environment 102. The user or the avatar may interact with the objects rendered in the metaverse.

For example, it is possible that a user can access the computer-simulated environment 102 via an interface, e.g., a virtual reality (VR) or augmented reality (AR) interface. For the purpose of this invention, the metaverse is comprised of one or more virtual assets 104-1 to 104-N rendered corresponding to the one or more assets 106-1 to 106-N interacting in the industrial environment. The metaverse may comprise a plurality of computer-simulated components. The computer simulated components can, for example, be understood as a representation, in particular a 3D representation, of a real or physical component. A component can, for example, be a room, a building, an item, or an object. The computer-simulated component can have different functionalities/features, e.g., an access interface. The metaverse can be realized by a hosting environment. The hosting environment can be, for example, be implemented as a cloud environment, an edge-cloud environment and/or on specific devices, e.g., mobile devices.

The computer simulated environment 102 is configured for rendering trraining scenarios for training the workers in the industrial environment. The training scenarios are run as training execrises in the comupter simulated environment 102 and responses to the training are recorded as the training proceeds. The workers 118-1 to 118-N enter the training scnerio in the computer simulated environemnt via user devices such as AR/VR headsets.

In one embodiment, the apparatus 110 is deployed in a cloud computing environment. As used herein, "cloud computing environment" refers to a processing environment comprising configurable computing physical and logical resources, for example, networks, servers, storage, applications, services, etc., and data distributed over the network 108, for example, the internet. The cloud computing environment provides on-demand network access to a shared pool of the configurable computing physical and logical resources. The apparatus 110 includes a module for automatically generating immersive training scenarios for workers 118-1 to 118-N in an industrial environment for hazardous events in a computer simulated environment 102.

In an example, the system 100 comprises a cloud computing device configured for providing cloud services for automatically generating immersive training scenarios for workers in an industrial environment for hazardous events in a computer simulated environment over a distributed network. The cloud computing device comprises a cloud communication interface, a cloud computing hardware and OS, and a cloud computing platform. The cloud computing hardware and OS may include one or more servers on which an operating system (OS) is installed and includes one or more processing units, one or more storage devices for storing data, and other peripherals required for providing cloud computing functionality. The cloud computing platform is a platform which implements functionalities such as data storage, data analysis, data visualization, data communication on the cloud hardware and OS via APIs and algorithms; and delivers the aforementioned cloud services using cloud-based applications.

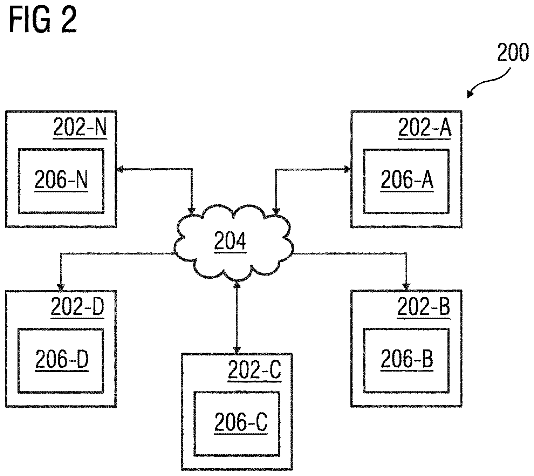

In an exemplary embodiment, the system 100 is implemented as a distributed ledger, wherein distributed ledger has nodes. Each node may belong to an entity and each of the nodes use the cloud computing hardware and OS to perform one or more actions in the distributed ledger. Each of the nodes comprise a computing device having a module and a database. One such exemplary embodiment is explained in further detail in conjunction with FIG 2.

FIG 2 is a block diagram of an exemplary distributed ledger 200 implemented using the system for automatically generating immersive training scenarios for workers 118-1 to 118-N in an industrial environment for hazardous events in a computer simulated environment 102, according to an embodiment of the present invention. In particular, the one or more distributed ledgers 200 (e.g., blockchain network) may be provided across one or more entities over a network 204. Exemplary entities 202-1 to 202-N, parties to a transaction, individual computing devices associated with one or more workers, one or more operators, one or more disaster management authorities, one or more health & safety management bodies, shared computing resources, smart devices (e.g., smartwatches, tablets, smartphones), and so on. The entities 202-1 to 202-N may store the distributed ledgers on computing systems which may be utilized in maintaining and/or updating the distributed ledgers. Each entity 202-1 to 202-N may be configured for storing a version of the distributed ledger or a portion thereof.

In some examples, the distributed ledger 200 is a blockchain based ledger wherein events and transactions are verified by the network participants in a decentralized manner and recorded on all participant nodes. Every node is identified by its address which is in turn derived from its public-private key pair. All data is recorded on the blockchain and accessible to all participants. This information is immutable and hence provides accountability and audit trails. Blockchain network (achieved via distributed consensus mechanisms) ensures that no single entity can control the network and as long as majority of the participants are honest, the network will function in a fair and unbiased manner. Blockchain also supports smart contracts which allows the business logic to be encoded in the form of a deterministic computer program. This program is executed in an isolated secure environment on all nodes and verified in a distributed manner.

In some embodiments, the entities 202-1 to 202-N include at least a set of computing devices 206-1 to 206-N, for example, a ledger may be stored on a large number of publicly available devices, each acting as a "node" for storing a copy of the ledger (e.g., being collaboratively maintained by anonymous peers on a network). In some embodiments, the ledger is only stored and maintained on a set of trusted "nodes", such as the computing systems of authorized users. In some embodiments, a combination and/or a "mix" of both trusted nodes and public nodes may be utilized, with the same and/or different rules being applied to activities performed at each (e.g., a different validation process may be used for untrusted nodes, or simply untrusted nodes may be unable to perform certain activities). In some embodiments, there may be different levels of nodes with differing characteristics and applied business logic.

The ledgers, ledger entries, and/or information stored on the ledger entries may be used for asset information, contract information, contractor information, operator information and so forth. Furthermore, the ledger may store digital certificates generated by the first entity and second entity, operational requirements of the assets, transactions involving different entities, automated "smart contracts" relating to control of assets and so forth. Smart contracts are computer instructions or code intended to facilitate, verify, or enforce the negotiation or performance of a contract. Further, the ledger and ledger entries may utilize encryption technology to facilitate and/or validate digital signatures,, for example, facilitating multi-signature documentation, ensuring the authenticity and integrity of assets, operators, and so on.

Each of the one or more entities 202-1 to 202-N may have, at various times, versions of the ledger, and the ledger may be maintained through the propagation of entries and/or updates that may be copied across ledgers. Ledger entries may contain elements of information (e.g., transaction records, document content, contract clauses, versioning information). There may be various rules and/or logic involved in activities relating to the ledger entries (e.g., creating, updating, validating),, for example, a supermajority or a unanimous consent between entities may be enforced as a condition to an activity relating to an entry. In some embodiments, distributed ledgers are utilized, and the ledger entries are adapted to have various linkages to one another such that the integrity of the ledger entries can be reinforced and/or validated.

The ledger may be maintained through, for example, a "distributed network system", the distributed network system providing decentralized control and storage of the ledger at the one or more entities (which may be considered "nodes" of the system). The number of "nodes" may be fixed or vary with time and increasing or decreasing the number of "nodes" may impact the performance and/or security of the system. The ledger copies stored and maintained at each "node" provide cross-validation with one another in the event of conflicts between ledgers, and various cryptographic and/or hashing algorithms may be utilized during the generation, updating, linking, and so on, of ledger entries such that ledger entries have increased resiliency to unauthorized tampering or modification.

For example, a distributed ledger may be distributed across entities 202-1 to 202-N and used to provide control access of an asset to other assets, operators, or other entities in a secure manner. The distributed ledger may have entries linked to one another using cryptographic asset information, contractor information, operator information, and entries in the blockchain may be ordered, time stamped, and/or associated with metadata such that the blockchain is designed for protection against "double" transfers and unauthorized modification of ledger entries, such as violation of policies.

In some embodiments, each block includes respective unique identifiers associated with one or more entities 202-1 to 202-N along with corresponding transaction data. The block also includes a timestamp indicating when the block was created. If there is more than one block in the blockchain, each block beyond a first block further includes a hash of a previous block in the blockchain.

The distributed database 114 or the blockchain is configured for storing incident information for hazardous events from various sites in a secure and reliable manner. This data can then be used to generate training scenarios for the workers.

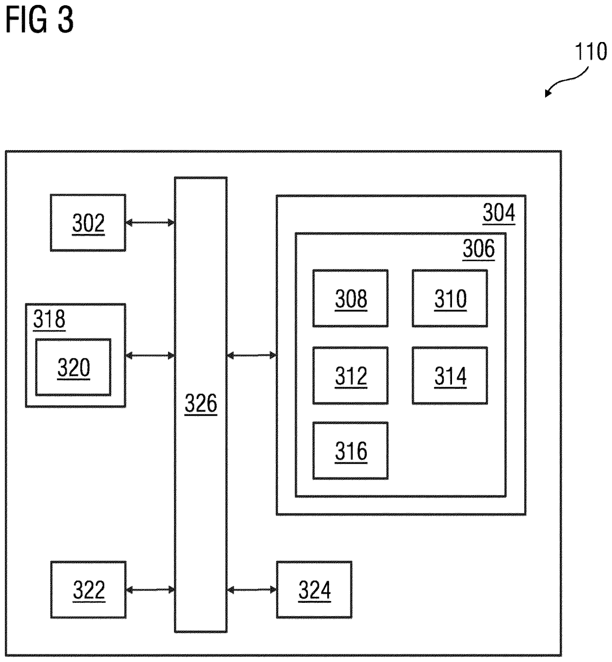

FIG 3 is a block diagram of an exemplary apparatus 110 automatically generating immersive training scenarios for workers in an industrial environment for hazardous events in a computer simulated environment, according to an embodiment of the present invention. The apparatus 110 may also be associated with different nodes in the distributed ledger to generate a decentralized network of one or more entities 202-1 to 202-N in the industrial environment. In an exemplary embodiment, the apparatus 110 is communicatively coupled to the one or more virtual assets 104-1 to 104-N in the computer simulated environment 102. In another exemplary embodiment, specific to a blockchain network, the apparatus 110 is integrated with the computing devices 202-1 to 202-N of FIG 2) associated with the nodes 202-1 to 202-N.

The apparatus 110 may be a personal computer, a laptop computer, a tablet, a server, a virtual machine, and the like. The apparatus 110 includes a processing unit 302, a memory 304 comprising a module 306, a storage unit 318 comprising a database 320, an input unit 322, an output unit 324 and a bus 326.

The processing unit 302 as used herein, means any type of computational circuit, such as, but not limited to, a microprocessor, microcontroller, complex instruction set computing microprocessor, reduced instruction set computing microprocessor, very long instruction word microprocessor, explicitly parallel instruction computing microprocessor, graphics processor, digital signal processor, or any other type of processing circuit. The processing unit 302 may also include embedded controllers, such as generic or programmable logic devices or arrays, application specific integrated circuits, single-chip computers, and the like.

The memory 304 may be non-transitory volatile memory and/or non-volatile memory. The memory 304 may be coupled for communication with the processing unit 302, such as being a computer-readable storage medium. The processing unit 302 may execute instructions and/or code stored in the memory 304. A variety of computer-readable instructions may be stored in and accessed from the memory 304. The memory 304 may include any suitable elements for storing data and machine-readable instructions, such as read only memory, random access memory, erasable programmable read only memory, electrically erasable programmable read only memory, a hard drive, a removable media drive for handling compact disks, digital video disks, diskettes, magnetic tape cartridges, memory cards, and the like.

In the present embodiment, the memory 304 includes the module 306 stored in the form of machine-readable instructions on any of the above-mentioned storage media and may be in communication to and executed by the processing unit 302. When the machine-readable instructions are executed by the processing unit 302, the module 306 causes the processing unit 302 to automatically generating immersive training scenarios for workers 118-1 to 118-N in an industrial environment for hazardous events in a computer simulated environment 102.

The module 306 further comprises a data acquisition module 308, sequence defining module 310, task defining module 312, simulation module 314, and performance analysis module 316.

The data acqusition module 308 is configured for information pertaining to operation of assets and related anomalies and hazards in the industrial environment for which training scenarios are to be simulated. The infromation can be related to different types of hazards in the industrial envrionment such as chemical hazards (toxic releases, spills), physical hazards (explosions, fires), biological hazards (exposure to harmful organisms), ergonomic hazards (poor workstation design), mechanical hazards (equipment malfunctions), and so on. In an example, the information acquired are case studies and incident reports, safety standards and regulations, risk assessment and management, emergency response guidelines, training and educational material, and the like. The data acquisition module 308 is configured to retrieve information pertaining to operation of assets and related anomalies and hazards in the industrial environment from a database. The database can be local database or public databases. In an example, the databases maybe from government agencies, research institutions, industry organization, international organizations, technical standards organizations, journals, online database and resources, etc. The data acquisition module 308 is configured to retrieve information pertaining to operation of assets and related anomalies and hazards in the industrial environment from a database such as a blockchain.

The sequence defining module 310 is configured for analyzing the data acquired from the data acqusition module 308. The sequence defining module 310 is configured for defining one or more sequence of events with respect to time that are to be performed in the computer simulation envrionment that lead to a hazardous event. The sequence defining module 310 is configured for identifying an ideal sequence of events from a simulation sequence of the industrial environement, and then defining the one or more sequences that deviates the assets from their ideal behaviour and lead to a hazardous event in the industrial environment.

The task defining module 312 is configured for a first set of tasks and a second set of tasks to be executed in the simulation sequence of the industrial environment comprising one or more assets. The task defining module 312 is configured for defining the first set of tasks or actions that are to be executed in the simulation sequence such that the one or more assets are operating at an ideal behavior. The ideal behaviour of the one or more assets is defined in the simulation sequence and the first set of tasks are actions that do not lead to a hazardous event in the industrial environment. The task defining module 312 is configured for defining the second set of tasks or actions that are to be executed in the simulation sequence such that the one or more assets are not operating at an ideal behavior or deviating from their ideal behavior. The second set of tasks are actions that lead to a hazadous event in the industrial environment.

The simulation module 314 is configured for simulating behaviour of assets in the computer simulated environment. The simulation module 314 is configured for loading a simulation sequence that is simulated for the behaviour of one or more assets in the industrial environment. The simulation module 314 is also configured for executing the first set of tasks in the simulation sequence. The simulation module 314 is also configured for executing the second set of tasks in the simulation sequence. The simulation module 314 is also configured for generating an immersive training scenario in the computer simulated environment based on the execution of the first set of tasks and the second set of tasks. The simulation module 314 also provides an input mechanism for the workers to execute the second set of tasks such that the simulation sequence proceeds towards a hazardous event in the training scenario being rendered in the computer simulated environment.

The performance analysis module 316 is configured for analyzing the performance of the workers participating in the training simulation scenarios generated for experiencing a hazardous event in the industrial environment. The performance analysis module 316 is configured for determining one or more actions to be executed by the workers that would contain the hazardous event. Further, performance analysis module 316 is configured for assigning a positive reward for a particular worker in the training scenario that executed the said one or more actions. The performance analysis module 316 is configured for determining one or more actions to be executed by the workers that would escalate the hazardous event. Further, the performance analysis module 316 is configured for assigning a negative reward for a particular worker in the training scenario that executed the said one or more actions. The performance analysis module 316 is configured for acquiring data pertaining to performance of each of the workers in the training session using one or more sensors. The performance analysis module 316 is configured for generating a detailed report of a performance and behavior of each of the workers participating in the training scenario based on the received positive rewards or negative rewards and the data acquired from the one or more sensors.

The processing unit 302 is configured for performing all the functionality of the module 306. The processing unit 302 is configured to acquire information pertaining to operation of assets and related anomalies and hazards in the industrial environment for which training scenarios are to be simulated. The processing unit 302 is configured to load a simulation sequence of the industrial environment comprising one or more assets operating at an ideal behavior. The simulation sequence executes a first set of tasks on the one or more assets within ideal behavior. The processing unit 302 is configured to define one or morse sequence of events from the acquired data that that lead to a hazardous event in the industrial environment based on the acquired information. The processing unit 302 is configured to determine a second set of tasks to be executed in the loaded simulation sequence. Herein, the second set of tasks are based on the defined sequence of events that lead to a hazardous event in the industrial environment. The processing unit 302 is configured to simulate the second set of tasks in the loaded simulation sequence. The processing unit 302 is configured to generate an immersive training scenario in the computer simulated environment based on the execution of the first set of tasks and the second set of tasks. Herein, the second set of tasks are initiated by workers during the execution of the training scenarios during a training session in the computer simulated environment.

The storage unit 318 comprises the database 320 for storing information pertaining to hazards, anomalies, safety standards, and so forth. The database 320 also stores simulation sequences, one or more training scenarios, one or more defined set of tasks, one or more worker reports, etc. The storage unit 318 and/or database 320 may be provided using various types of storage technologies, such as solid state drives, hard disk drives, flash memory, and may be stored in various formats, such as relational databases, non-relational databases, flat files, spreadsheets, and extended markup files, etc.

The input unit 322 may provide ports to receive input from input devices such as keypad, touch-sensitive display, camera (such as a camera receiving gesture-based inputs), etc. capable of receiving access requests, authorization requests, etc. the The display unit 324 may provide ports to output data via output device with a graphical user interface for displaying the plurality of digital twins in the computer simulated virtual environment. The bus 326 acts as interconnect between the processing unit 302, the memory 304, the storage unit 318, the input unit 322, and the display unit 324.

Those of ordinary skilled in the art will appreciate that the hardware depicted in FIG 3 may vary for particular implementations., for example, other peripheral devices such as an optical disk drive and the like, Local Area Network (LAN)/ Wide Area Network (WAN)/ Wireless (e.g., Wi-Fi) adapter, graphics adapter, disk controller, input/output (I/O) adapter also may be used in addition to or in place of the hardware depicted. The depicted example is provided for the purpose of explanation only and is not meant to imply architectural limitations with respect to the present disclosure.

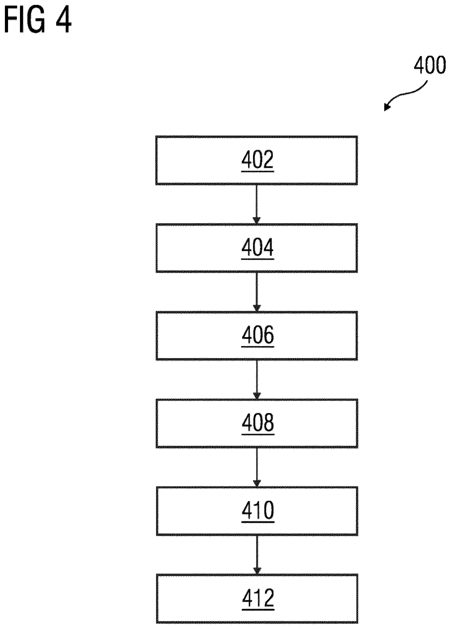

FIG 4 is a flowchart depicting steps of a method 400 for automatically generating immersive training scenarios for workers in an industrial environment for hazardous events in a computer simulated environment, according to an embodiment of the present invention.

The "hazardous event" refers to an emergency event which occurs suddenly and poses a risk of injury, illness, or damage to workers, equipment, or the environment. Identifying and understanding these hazards is crucial for maintaining a safe and healthy workplace. In some scenarios, hazardous events are divided into four levels according to factors such as the property, the severity, the controllability, the influence range and the like of the hazardous event according to the national emergency public event general emergency plan: class i (extra heavy), class ii (heavy), class iii (larger) and class iv (general). According to the occurrence process, property and mechanism of the emergent common events, the emergent events are divided into four types: natural disasters, accident disasters, public health events, social security events and the like. The hazardous events refers to different levels and different types of hazardous events which occur when people perform production activities, such as a laboratory explosion scene, a gas station fire scene, a high-altitude suspension operation high-drop scene, a welding operation electric shock scene, a gas and gas leakage scene for catering, a power distribution room fire scene, a mechanical injury scene of a common product warehouse, an explosion scene of a toxic commodity warehouse, a hazardous chemical leakage scene of a corrosive commodity warehouse, a mechanical injury scene of a refrigeration house, a fire scene of an old-age institution, a fire scene of a business supermarket, a poisoning scene of a liquid ammonia filling station, a liquid ammonia transportation leakage scene and the like.

In the present invention, the training simulation scenarios need to be simulated for each possible hazardous events such that the workers and operators can be trained on the training simulation scenarios. The training simulation scenarios are structured exercises that replicate real-world situations in a controlled computer simulated environment. The training simulation scenarios are designed to help workers practice and improve their skills, knowledge, and decision-making abilities without the risks associated with actual operations. These scenarios are tailored to specific tasks or hazards found in the workplace and are essential for effective training programs. The training simulation scenarios are designed in a manner such that the workers have an immersive and realistic experience of the hazardous event and can improve their skills based on the performance analysis. In an example, the different training scenarios needs to be carried out on each emergency scene, environmental scenes, character roles, equipment facilities, animations, special effects and the like are researched and developed according to emergency knowledge contents, different emergency scenes are loaded according to business needs, and a practical training environment with strong immersion and strong interactivity is constructed.

For the present invention, the training scenarios are generated on a simulation sequence of the industrial environment comprising one or more assets 106-1 to 106-N. The virtual assets 104-1 to 104-N correspond to real-world objects in the industrial environment such as the one or more assets 106-1 to 106-N including but not limited to motors, gears, bearings, shafts, switchgears, rotors, circuit breakers, protection devices, remote terminal units, transformers, reactors, disconnectors, gear-drive, gradient coils, magnet, radio frequency coils etc. Exemplary technical systems include turbines, large drives, Magnetic Resonance Imaging (MRI) scanner, etc. The virtual assets 104-1 to 104-N are commonly generated simultaneously with the real devices and systems, such as processing equipment and sensors in the facility. Once created by a specific vendor for their own specific equipment, the virtual asset can be used to represent the assets in a digital representation of a real-world system. The virtual asset 104-1 to 104-N is created such that it is identical in form and behavior to the corresponding machine. The virtual asset thus generated may be a dynamic virtual replica based on one or more of physics-based models, Computer-Aided Design (CAD) models, Computer-Aided Engineering (CAE) models, one-dimensional (1D) models, two-dimensional (2D) models, three-dimensional (3D) models, finite-element (FE) models, descriptive models, metamodels, stochastic models, parametric models, reduced-order models, statistical models, heuristic models, prediction models, ageing models, machine learning models, Artificial Intelligence models, deep learning models, system models, knowledge graphs and so on.

The plurality of virtual assets 104-1 to 104-N along with the executed training simulation scenarios can be visualized in the computer simulated virtual environment 102, for example, in the metaverse. It can be understood as a virtual world of the industrial environment wherein the plurality of virtual assets 104-1 to 104-N are interacting with one another and the first set of tasks, second set of tasks and the third set of tasks are executed in the loaded simulation sequence such that the one or more training scenarios are rendered to the workers for training on selected hazardous events. Such virtual assets 104-1 to 104-N are in particular accessible by the user, i.e. virtual assets 104-1 to 104-N accessible from the real/physical world., for example, it is possible that the user can access the plurality of virtual assets 104-1 to 104-N in the metaverse via an interface, e.g., a virtual reality (VR) or augmented reality (AR) interface. The counterpart of the computer-simulated environment does not necessarily have to exist but can be, for example, a three-dimensional model of an asset in the industrial environment.

For the present invention, the uses or workers 118-1 to 118-N in the metaverse visualizes the one or more training scenarios by entering into metaverse through their respective devices (not shown). In other words, the user requires a device (or a hardware device) to access the virtual assets 104-1 to 104-N and experience the training scenario in the metaverse. The "workers" or sometimes referred to as "users" in the metaverse refer to individuals who participate in and interact with the virtual assets in the industrial metaverse. Users engage with the metaverse through various devices, such as VR, headsets, AR glasses, MR headsets, holographic displays, smartphones, tablets, or personal computers, accessing virtual environments, experiences, and services. In an example, the device may be a virtual reality (VR) headset such as Oculus Quest 2, HTC Vive Pro 2, Sony PlayStation VR, Valve Index etc. In another example, the device may be an augmented reality (AR) headset such as Microsoft HoloLens 2, Magic Leap One, Google Glass Enterprise Edition 2, Epson Moverio BT-300, etc. The devices comprise sensors to track users' movements, gestures, and interactions, as well as to provide environmental feedback for a more immersive experience. In an example, the sensors in the device may include accelerometers, gyroscopes, magnetometers, proximity sensors, depth sensors, time of flight sensors, eye tracking sensors, inertial measurement units (IMUs), cameras, and so on.

At step 402, information pertaining to operation of assets and related anomalies and hazards in the industrial environment is acquired for which training scenarios are to be simulated. The information pertaining to hazards that have occurred already or that may occur in future or under certain circumstances are collected from various databases. The information is related to different types of potential hazards in the industrial environment such as chemical hazards (toxic substances, flammable and combustible material, corrosive material, reactive chemicals, etc.), physical hazards (temperatures, radiation, vibration, etc.), biological hazards (microorganisms, allergens, biohazardous waster), mechanical hazards (moving machinery, falling objects, sharp objects), electrical hazards (electric shock, arc flash, electrical fires), fire and explosion hazards (combustible dust, flammable gas and liquids, pressurized containers, etc.), environmental hazards (pollutants, waste disposal, spill and leaks) and the like. Some examples of chemical hazards are exposure to benzene (toxic substance), handling of gasoline (flammable material), use of sulfuric acid (corrosive material), storage of sodium metal (reactive chemical), etc. Some examples of physical hazards are working near loud machinery (noise), welding in a confined space (radiation), operating in a freezer warehouse (temperature extremes), using vibrating tools like jackhammers (vibration), etc. Some examples of biological hazards are handling contaminated needles (biohazardous waste), exposure to Legionella bacteria in cooling towers (microorganisms), working in damp environments with mold (allergens), etc. Some examples of mechanical hazards are operating a lathe with exposed rotating parts (moving machinery), storing tools on high shelves (falling objects), using box cutters without proper guards (sharp objects), etc. Some examples of electrical hazards are working with exposed wiring (electric shock), performing maintenance on electrical panels (arc flash), overloading power strips (electrical fires) etc. Some examples of fire and explosion hazards are dust accumulation in grain processing facilities (combustible dust), leaks in gas pipelines (flammable gases), handling propane tanks (pressurized containers), etc.

According to an embodiment, information pertaining to operation of assets and related anomalies and hazards in the industrial environment is retrieved from a database. The information is acquired from various databases including public databases, private databases, online databases. In an example, the information acquired are case studies and incident reports, safety standards and regulations, risk assessment and management, emergency response guidelines, training and educational material, and the like. In an example, the databases maybe from government agencies, research institutions, industry organization, international organizations, technical standards

According to an embodiment, information pertaining to operation of assets and related anomalies and hazards in the industrial environment is retrieved from a distributed database, wherein the distributed database is a blockchain configured to store information pertaining to operation of assets and related anomalies and hazards in the industrial environment from multiple trusted sources. In an example, a blockchain is provided to multiple trusted sources for reporting incidents across geographical regions in different industries, factories, warehouses, etc. A particular hazardous incident is documented in the blockchain and then other industry experts review the incident on the blockchain such that only genuine and accurate information is added to the blockchain.

As an example, a particular hazardous incident such as a chemical spill in a factory can be documented by following the below steps:
1. Hazard Identification
   - Date/Time: July 30, 2024, 14:35
   - Location: Chemical storage area, Building 5
   - Description: A container of hydrochloric acid was knocked over, resulting in a spill of approximately 10 liters on the floor.
2. Incident Report
   - Reported By: John Smith, Safety Officer
   - Witnesses: Jane Doe, Line Worker
   - Incident Summary:
      ∘ While moving pallets, a forklift operator accidentally bumped into a shelf, causing a container of hydrochloric acid to fall and spill.
      ∘ Immediate area was evacuated, and spill containment procedures were initiated.
3. Risk Assessment
   - Hazard Type: Chemical spill
   - Potential Impact:
      ∘ Health: Chemical burns, respiratory irritation
      ∘ Environmental: Contamination of drainage systems
      ∘ Operational: Temporary shutdown of affected area
   - Likelihood: Moderate
   - Severity: High
4. Control Measures
   - Immediate Actions:
      ∘ Evacuate the area and restrict access.
      ∘ Use spill containment kits to control and neutralize the acid.
      ∘ Ventilate the area to disperse fumes.
   - Preventive Measures:
      ∘ Improve storage solutions to prevent accidents (e.g., secure shelving, proper labeling).
      ∘ Conduct regular training on handling and storage of hazardous materials.
      ∘ Implement routine inspections to ensure compliance with safety protocols.
5. Incident Follow-Up
   - Clean-Up and Disposal:
      ∘ Neutralize the spill using appropriate neutralizing agents.
      ∘ Clean and decontaminate the area.
      ∘ Dispose of hazardous waste following environmental regulations.
   - Medical Attention:
      ∘ Provide first aid to any affected individuals.
      ∘ Conduct medical evaluations as necessary.
   - Investigation Report:
      ∘ Conduct a detailed investigation to determine root causes.
      ∘ Implement corrective actions to prevent recurrence.
      ∘ Document findings and update safety procedures.
6. Documentation and Reporting
   - Forms Used:
      ∘ Hazard/Incident Report Form
      ∘ Risk Assessment Form
      ∘ Investigation Report Form
   - Records Maintained:
      ∘ Incident logs
      ∘ Training records
      ∘ Inspection and maintenance logs
   - Reporting to Authorities (if required):
      ∘ Notify relevant regulatory bodies, such as OSHA or local environmental agencies.
7. Review and Monitoring
   - Safety Meetings:
      ∘ Discuss the incident and preventive measures in weekly safety meetings.
      ∘ Review and update safety protocols.
   - Ongoing Monitoring:
      ∘ Regular audits and inspections to ensure compliance with new safety measures.
      ∘ Continuous improvement based on feedback and new information. organizations, journals, online database and resources, etc.

An example of a sample documentation of the chemical spill can be documented as a report and then stored on the blockchain as shown in table 1:

**Table 1**

| | |
|---|---|
| Date/Time of Incident | July 30, 2024, 14:35 |
| Location | Chemical storage area, Building 5 |
| Reported By | John Smith, Safety Officer |
| Witnesses | Jane Doe, Line Worker |
| Incident Description | Container of hydrochloric acid spilled due to accidental bump by forklift. |
| Immediate Actions Taken | Evacuated area, contained spill, ventilated area. |
| Potential Impact | Chemical burns, respiratory irritation, environmental contamination. |
| Likelihood | Moderate |
| Severity | High |
| Immediate Control Measures | Evacuated area, used spill containment kits, ventilated area. |
| Preventive Measures | Improved storage solutions, regular training, routine inspections. |
| Follow-Up Actions | Clean-up and decontamination, medical evaluations, detailed investigation. |
| Investigation Findings | Root cause identified as inadequate shelving; corrective actions implemented. |
| Reporting to Authorities | OSHA notified as required. |
| Documentation | Incident log updated, safety procedures revised. |
| Review and Monitoring | Discussed in safety meetings, regular audits scheduled. |

At step 404, a simulation sequence of the industrial environment comprising one or more assets operating at an ideal behavior is loaded in the computer simulated environment. The simulation sequence executes a first set of tasks on the one or more assets within ideal behavior. The term "simulation sequence" refers to a series of steps or actions taken to model and analyze the behavior of a system or process over time using computer-based simulations. This sequence involves creating a virtual representation of the one or more assets running the simulation and interpreting the results to gain insights or make decisions. In a specific embodiment, the assets are trained in a simulation environment for which a large number of simulation scenarios are generated. The simulation environment may be based on one or more of physics-based models, Computer-Aided Design (CAD) models, Computer-Aided Engineering (CAE) models, one-dimensional (1D) models, two-dimensional (2D) models, three-dimensional (3D) models, finite-element (FE) models, descriptive models, metamodels, stochastic models, parametric models, reduced-order models, statistical models, heuristic models, prediction models, ageing models, machine learning models, Artificial Intelligence models, deep learning models, system models, surrogate models and the like. In the present embodiment, the simulation environment hosts a simulation model that is built based on test operation data such as simulation data, experimental data and mathematical data associated with a plurality of operations/functionalities to be performed at an ideal behavior by the asset. The simulation data is generated by simulating the ideal behavior of the one or more assets in an environment corresponding to inputs provided to the asset, modifications to the environment of the asset, one or more requirements or expected outcome of the asset, one or more requests from the operators/users for assets and so forth. The ideal behavior of an asset refers to the optimal performance and operational characteristics that ensure safety, efficiency, reliability, and cost-effectiveness. The simulation environment may be provided by the computer simulated environment 102. In a preferred embodiment, the simulation sequence comprising the one or more assets operating at the ideal behavior is loaded into the computer simulated environment 102. The simulation sequence executes the first set of tasks on the one or more virtual assets 104-1 to 104-N operating with the ideal behavior. The first set of tasks are the operations or actions performed on the one or more virtual assets that correspond to a normal operation or ideal behavior of the virtual assets. The first set of tasks can be understood as inputs to the one or more asset in the metaverse such that the assets are operating within an ideal behavior. In an example, for operating a CNC milling machine, the first set of tasks are powering up a CNC machine, verifying that all parts of the machine are lubricated properly, installing correct cutting tools, ensuring safety features are in place and functioning, selecting appropriate machining program on HMI, inserting correct parameters such as cutting speed, feed rates, depth of cut etc., calibrating the machine, powering down, removing the workpiece, clean the machine etc. The first set of tasks can be executed automatically in the simulation sequence as an automated series of tasks that are executed to show an ideal behavior of the operation of the assets to the workers. The first set of tasks can also be performed by the workers when the workers are undergoing a training session in the training scenario.

At step 406, one or more sequence of events are defined based on the acquired information that lead to a hazardous event in the industrial environment. It is to be understood that hazardous event in the industrial environment occur due to a combination of factors, often related to human error, equipment failure, environmental conditions, or inadequate safety measures. One of the important factors that lead to a hazardous event is human error that may include inadequate training, negligence in operating machines, fatigue, poor communication between workers, misjudgment of a situation, etc. The one or more sequence of events can be identified from the information acquired from different databases on hazardous events or incidents reported. The one or more sequence of events are one or more actions that are performed by the workers in a situation at a particular time combined with aftereffects (or the sequence of events that follow) of the actions performed that lead to a hazardous event in the industrial environment. The one or more sequence of events are automatically identified from the information acquired on hazardous events. The information from the different sources is analyzed and then all possible scenarios having permutations and combination of the actions that lead to a particular hazardous event are generated. Each scenario comprises a sequence of events that lead to the same hazard or an escalated hazard for which the training scenarios is being generated in the industrial environment. In an example, one or more sequence of events for possible scenarios of a chemical spill in the factory are:
1. "operator drops a container due to poor handling techniques 4 container drops and chemical is spilt 4 chemical starts spreading in the affected area";
2. "container was damages due to pervious incident 4 worker ignores the damage 4 worker starts transporting the container 4 chemical spills 4 chemical starts spreading in the affected area";
3. "storage area is poorly lit 4 workers ignore the poor lighting 4 workers start transporting the container 4 container is dropped 4 chemical is spilt 4 chemical starts spreading in the affected area"

In a similar fashion, the sequence of events are identified for several hazards for which a training scenario is to generated that lead to a hazardous event. It is to be noted that several permutations and combinations of the one or more sequences can be generated based on the information using a generative artificial intelligence algorithm. The generative artificial intelligence algorithm inputs several parameters and factors that lead to a hazardous event and then generate multiple scenarios that may lead to the particular hazardous event. This method makes sure that none of the possible scenarios are neglected for training the workers.

At step 408, a second set of tasks to be executed in the loaded simulation sequence are defined. The second set of tasks are based on the defined sequence of events that lead to a hazardous event in the industrial environment. The second set of tasks are or more actions that are to initiate a training scenario in the computer simulated environment. The second set of tasks also include the actions that are automatically performed by a virtual trainer as an input to start a hazardous event in the training scenario. The second set of tasks also include preventive measures or actions that maybe performed by the workers to contain the hazard in the training scenario as part of training experience and learning. It is to be understood that the second set of tasks are executable inputs on the loaded simulation sequence that lead to hazardous event. The second set of tasks are defined from the one or more sequences that lead to a hazardous event. The method comprises analyzing the one or more sequences and identifying one or more actions that are to be performed by the workers participating in the training scenario. The second set of tasks can be actions that escalate the hazardous event or actions that contain the hazardous event as the training progresses.

For the example of chemical spill in the factory as explained above, the second set of tasks are for escalating the hazard are as below:
1. worker drops the container filled with chemicals 4 informs a nearby co-worker 4 starts running in the factory 4 creates panic on the factory floor 4 chemical spill not contained properly
2. worker drops the container filled with chemicals 4 worker raises an alarm 4 other workers create panic by alarm
3. worker drops the container filled with chemicals 4 worker raises an alarm 4 emergency response team is notified 4 the safety officer announces evacuation order 4 workers get confused and rush towards exit 4 workers are injured in the rush
4. worker drops the container filled with chemicals 4 worker raises an alarm 4 emergency response team is notified 4 the safety officer announces evacuation order 4 workers do not follow guidelines of containment and ventilation 4 creating suffocation for other workers

For the example of chemical spill in the factory as explained above, the second set of tasks are for containing the hazard are as below:
1. worker drops the container filled with chemicals 4 immediate response is the emergency alarm 4 the emergency response team (ERT) is notified 4 other workers are alerted and follow the evacuation procedure without panic and evacuate to pre-designated assembly points 4 supervisors perform headcount to ensure safety 4 ERT is equipped with protective equipment 4 procedure to contain the spill is initiated 4 barrier setup 4 ventilation system is activated to disperse hazardous vapors 4 further potential risks such as fire explosion, toxic exposure 4 removal of contaminated materials 4 decontamination of the affected area 4 proper waste disposal 4 documentation of the incident 4 root causes analysis 4 review of safety protocols

At step 410, the second set of tasks are simulated in the loaded simulation sequence. Once the second set of tasks are identified from the one or more sequences, the second set of tasks are simulated in the loaded simulation sequence in order to verify an expected behavior of the one or more virtual assets in the simulation sequence in response to the second set of tasks when executed. The simulations of the second set of tasks and a reaction to the operational behavior of the assets is determined and executed in the simulation sequence. Furthermore, new simulation sequences are generated in the loaded simulation sequence when the second set of tasks are executed. The new simulations sequence can be generated based on known behavior of the one or more virtual assets when the second set of tasks are input into the loaded simulation sequence, It is to be note that when the second set of tasks are determined, corresponding one or more sequence of actions of the behavior of the assets is also determined and then simulated in the computer simulated environment.

At step 412, an immersive training scenario is generated in the computer simulated environment based on the execution of the first set of tasks and the second set of tasks. The second set of tasks are initiated by workers during the execution of the training scenarios during a training session in the computer simulated environment. The immersive training scenario is generated by simulating both the first set of tasks and the second set of tasks in the loaded simulation sequence. It is to be noted that a plurality of training scenarios are generated based on the different permutations and combinations of the one or more sequences of events identified from acquired information. A training session is generated for one particular hazardous event for one sequence of events that may take place in the industrial environment. Advantageously, multiple training scenarios are generated for training the workers in multiple training sessions such that all workers are trained in all possible scenarios that they may encounter in real-world scenarios. The training scenario is generated with all the functionalities of a training session such as providing an interface for setting training objectives, real-time feedback, assessment tools such as quizzes at the end of a training session, progress tracking, progress evaluation of workers, etc.

The generation of a training session based on the training scenarios generated is out of the scope of this invention and known in the art, hence not explained in further detail.

According to an embodiment, the method further comprises determining one or more actions to be executed by the workers that would contain the hazardous event. Further, the method comprises assigning a positive reward for a particular worker in the training scenario that executed the said one or more actions. The one or more actions that are to be executed by the workers that contain the hazardous events are identified based on the second set of tasks. In some examples, the one or more actions could also be identified during a training session when a new action executed by the user contains the hazardous event. Further, for the one or more actions that contain the hazardous event, a positive reward is provided to the worker executing the said actions. The positive rewards are provided to the worker based on an impact of their action in containing the hazardous event. It should be understood that workers in the training scenario will have defined roles, and hence the performance of the workers is evaluated based on an expected action to be performed by the workers based on their role, and the positive rewards are granted accordingly.

In an example, the one or more actions for which positive rewards are given to a worker are: worker informing the ERT on spill of chemicals, worker raising an incident alarm, worker following evacuation procedure, worker setting up barrier, workers performing headcount, workers equipping themselves with protective equipment, workers accurately performing procedure to contain the chemical spill, workers opening ventilation systems, worker evaluating further risks, worker disposing chemical carefully, worker documenting the incident afterwards, etc.

According to an embodiment, the method further comprises determining one or more actions to be executed by the workers that would escalate the hazardous event. Further, the method comprises assigning a negative reward for a particular worker in the training scenario that executed the said one or more actions. The one or more actions that are to be executed by the workers that escalate the hazardous events are identified based on the second set of tasks. In some examples, the one or more actions could also be identified during a training session when a new action executed by the user contains the hazardous event. Further, for the one or more actions that escalate the hazardous event, a negative reward is provided to the worker executing the said actions. The negative rewards are provided to the worker based on an impact of their action in escalating the hazardous event. It should be understood that workers in the training scenario will have defined roles, and hence the performance of the workers is evaluated based on an expected action to be performed by the workers based on their role, and the negative rewards are granted accordingly.

In an example, the one or more actions for which negative rewards are given to a worker are as follows worker drops the container filled with chemicals, worker, informs a nearby co-worker, worker starts running in the factory, worker creates panic on the factory floor, workers get confused and rush towards exit; workers tripping and injuring themselves, workers not following safety procedures and protocol, etc.

According to an embodiment, the method further comprises acquiring data pertaining to performance of each of the workers in the training session using one or more sensors. The workers 118-1 to 188-N participate in the training session through various devices, such as VR, headsets, AR glasses, MR headsets, holographic displays, smartphones, tablets, or personal computers, accessing virtual environments, experiences, and services. In an example, the device may be a virtual reality (VR) headset such as Oculus Quest 2, HTC Vive Pro 2, Sony PlayStation VR, Valve Index etc. In another example, the device may be an augmented reality (AR) headset such as Microsoft HoloLens 2, Magic Leap One, Google Glass Enterprise Edition 2, Epson Moverio BT-300, etc. The devices comprise sensors to track users' movements, gestures, and interactions, as well as to provide environmental feedback for a more immersive experience. In an example, the sensors in the device may include accelerometers, gyroscopes, magnetometers, proximity sensors, depth sensors, time of flight sensors, eye tracking sensors, inertial measurement units (IMUs), cameras, and so on. The sensors provide data pertaining to performance of the users in the training session. The data collected from the one or more sensors can be personal information, training progress data, performance data, interaction data, engagement and participation data, behavioral metrics data, physiological data, environmental interaction data, feedback data, etc.

In an embodiment, the method comprises generating a detailed report of a performance and behavior of each of the workers participating in the training scenario based on the received positive rewards or negative rewards and the data acquired from the one or more sensors. The detailed report of the workers in the training scenario is based on the data collected from the one or more sensors such as personal information, training progress data, performance data, interaction data, engagement and participation data, behavioral metrics data, physiological data, environmental interaction data, feedback data, etc. A performance metrics is generated for the workers participating in the training scenario based on the data received from the sensors in the user devices. The detailed report is designed based on performance metrics comprising various factors based on the collected data and rewards received by the user during the training session. In an example, the detailed report is based on engagement and participation data such as logins and session duration data that tracks how often and how long participants engage with the training, activity completion rates data that measures the completion of specific interactive activities or tasks, participation data that tracks involvement in collaborative or discussion-based components. In another example, the detailed report is based on behavioral metrics such as decision making patterns which is done based on analysis of choices made during simulations, problem solving approaches which is based on evaluation of methods used to tackle training scenarios, consistency in actions that tracks if actions align with learned protocols and best practices. In another example, the detailed report is based on spatial and movement data of the workers such as movement tracking data that records physical movements within the virtual environment, such as walking, reaching, and bending, posture and positioning data that monitors body posture and positioning during tasks to assess ergonomics and efficiency, and proximity data that measures the distance to hazards or objects to ensure safe practices are followed. In another example, the detailed report is based on physiological data such as heart rate monitoring data that tracks heart rate to assess stress levels and physiological responses to scenarios, gaze tracking data that monitors eye movements to see where the participant is focusing their attention, biometric data such as pupil dilation and skin conductance to gauge engagement and emotional responses. In another example, the detailed report is based on environmental interaction data such as object interaction that records how and when workers interact with virtual objects and tools, task completion data that measures the accuracy and efficiency of task completion within the training scenario.

According to an embodiment, the method further comprises identifying new one or more sequence of events and corresponding third set of tasks to be executed in the loaded simulation sequence, wherein the new one or more sequence of events are the events that are not present in the database or the distributed database. The new one or more sequence of events that are not explicitly present in the information acquired form databases can be derived from the database using a generative artificial intelligence algorithm. The generative artificial intelligence algorithm inferences and deduces relationships between various assets, operations, and possible hazards that may occur in the industrial environment to generate the new one or more sequence. Furthermore, the third set of tasks that are actions be to executed in the loaded simulation sequence are defined from the new one or more sequences. In some examples, the third set of tasks could also be identified during a training session when a new action executed by the user contains the hazardous event. According to an embodiment, the method further comprises generating an updated immersive training scenario in the computer simulated environment based on the execution of the second set of tasks and the third set of tasks. When a new sequence of events and corresponding third set of tasks are identified from a running training scenario, then the training scenario is updated to encompass the new simulation sequence such that none of the scenarios for training the workers are missed out.

Advantageously, the present invention provides a sytem and method for automatically generating training scenarios for workers in the computer simulated environment. The present invention provides immersive training scenraios for training the workers working in an industrial envrionment. Advantageously, the present invention provides a reliable system for collecting information from trusted sources about various incidents and hazards that have previosuly occurred in factories in different locations. It is to be understood that the incident information is stored in the blockcahin and evaluated by industry experts and then only used for generating simulation scenarios. Furthermore, the present invention provides a system for automatic generation of training simulation scenarios intending all possibilities of occurrence of sequence of events in the real world based on the acquired information from different databases. Advantageosly, the present invention also provides a generative AI algorithm to identify and generate new sequences that are not present in the database but are possible in the real-world. Moreover, the present invention evaluates the performance of workers in the training by awarding them positive and negative rewards that aids in generating a relistic performance evaluation report.

Those skilled in the art will recognize that, unless specifically indicated or required by the sequence of operations, certain steps in the processes described above may be omitted, performed concurrently or sequentially, or performed in a different order.

While the present invention has been described in detail with reference to certain embodiments, it should be appreciated that the present disclosure is not limited to those embodiments. The foregoing examples have been provided merely for the purpose of explanation and are in no way to be construed as limiting of the present invention disclosed herein. While the invention has been described with reference to various embodiments, it is understood that the words, which have been used herein, are words of description and illustration, rather than words of limitation. Further, although the invention has been described herein with reference to particular means, materials, and embodiments, the invention is not intended to be limited to the particulars disclosed herein; rather, the invention extends to all functionally equivalent structures, methods and uses, such as are within the scope of the appended claims. Those skilled in the art, having the benefit of the teachings of this specification, may effect numerous modifications thereto and changes may be made without departing from the scope of the invention in its aspects.

### List of references

- 100: system
- 102: computer simulated environment
- 104-1 to 104-N: plurality of virtual assets
- 106-1 to 106-N: one or more assets
- 108: communication network
- 110: apparatus
- 112: local database
- 114: distributed database
- 118-1 to 118-N: one or more workers
- 200: distributed ledger
- 202-1 to 202-N: one or more entities
- 204: network
- 206-1 to 206-N: one or more computing devices
- 302: one or more processing units
- 304: memory unit
- 306: module
- 308: data acquisition module
- 310: sequence defining module
- 312: task defining module
- 314: simulation module
- 316: performance analysis module
- 318: storage unit
- 320: database
- 322: input unit
- 324: output unit
- 326: bus
- 400: flowchart depicting steps of a method for automatically generating immersive training scenarios for workers in an industrial environment for hazardous events in a computer simulated environment

## Claims

1. A method (400) for automatically generating immersive training scenarios for workers (118-1 to 118-N) in an industrial environment for hazardous events in a computer simulated environment (102), the method comprising:
acquiring, by a processing unit (302), information pertaining to operation of assets (106-1 to 106-N) and related anomalies and hazards in the industrial environment for which training scenarios are to be simulated;
loading, by the processing unit (302), a simulation sequence of the industrial environment comprising one or more assets (106-1 to 106-N) operating at an ideal behavior, wherein the simulation sequence executes a first set of tasks on one or more virtual assets (104-1 to 104-N) within ideal behavior;
defining, by the processing unit (302), one or more sequence of events that lead to a hazardous event in the industrial environment based on the acquired information;
determining, by the processing unit (302), a second set of tasks to be executed in the loaded simulation sequence, wherein the second set of tasks are based on the defined sequence of events that lead to a hazardous event in the industrial environment;
simulating, by the processing unit (302), the second set of tasks in the loaded simulation sequence; and
generating, by the processing unit (302), an immersive training scenario in the computer simulated environment (102) based on the execution of the first set of tasks and the second set of tasks in the loaded simulation sequence, wherein the second set of tasks are initiated by workers (118-1 to 118-N) during the execution of the training scenarios during a training session in the computer simulated environment.

2. The method (400) according to claim 1, further comprising:
determining, by the processing unit (302), one or more actions to be performed by the workers (118-1 to 118-N) that would contain the hazardous event; and
assigning, by the processing unit, a positive reward for a particular worker in the training scenario that executed the said one or more actions.

3. The method (400) according to any of the claims 1 or 2, further comprising:
determining, by the processing unit (302), one or more actions to be performed by the workers (118-1 to 118-N) that would escalate the hazardous event;
assigning, by the processing unit, a negative reward for a particular worker in the training scenario that executed the said one or more actions.

4. The method (400) according to any of the claims 1 to 3, further comprising:
acquiring, by the processing unit (302), data pertaining to performance of each of the workers (118-1 to 118-N) in the training session using one or more sensors; and
generating, by the processing unit, a detailed report of a performance and behavior of each of the workers participating in the training scenario based on the received positive rewards or negative rewards and the data acquired from the one or more sensors.

5. The method (400) according to any of the preceding claims, wherein information pertaining to operation of assets (106-1 to 106-N) and related anomalies and hazards in the industrial environment is retrieved from a database (112).

6. The method (400) according to any of the preceding claims, wherein information pertaining to operation of assets (106-1 to 106-N) and related anomalies and hazards in the industrial environment is retrieved from a distributed database (114), wherein the distributed database is a blockchain configured to store information pertaining to operation of assets and related anomalies and hazards in the industrial environment from multiple trusted sources.

7. The method (400) according to any of the preceding claims, further comprising identifying new one or more sequence of events and corresponding third set of tasks to be executed in the loaded simulation sequence, wherein the new one or more sequence of events are the events not present in the database (112) or the distributed database (114).

8. The method (400) according to claim 7, further comprising generating an updated immersive training scenario in the computer simulated environment (102) based on the execution of the second set of tasks and the third set of tasks.

9. An apparatus (300) for efficient automatically generating immersive training scenarios for workers (118-1 to 118-N) in an industrial environment for hazardous events in a computer simulated environment (102), the apparatus comprising:
one or more processing units (302); and
a memory (304) communicatively coupled to the one or more processing units, the memory comprising a module (306) stored in the form of machine-readable instructions executable by the one or more processing units, wherein the module is configured to perform the method steps according to claims 1 to 8.

10. A system (100) for automatically generating immersive training scenarios for workers (118-1 to 118-N) in an industrial environment for hazardous events in a computer simulated environment (102), the system comprising:
a computer simulated environment (102) rendering one or more virtual assets (104-1 to 104-N) corresponding to real-world assets (106-1 to 106-N) in an industrial environment, wherein the computer simulated environment is configured for executing training scenarios; and
a database (112), and a distributed database (114) communicatively coupled to the computer simulated environment, for storing hazardous events; and
an apparatus (110) according to claim 9, communicatively coupled to the computer simulated environment (102), the database (112) and the distributed database (114), wherein the apparatus is configured for efficiently render one or more scenes to one or more users interacting in a computer simulated environment, according to any of the method claims 1 to 8.

11. A computer-program product, having computer-readable instructions stored therein, that when executed by a processing unit, cause the processing unit to perform method steps according to any of the claims 1 to 8.

12. A computer readable medium on which program code sections of a computer program are saved, the program code sections being loadable into and/or executable in a system to make the system execute the method steps according to any of the claims 1 to 8 when the program code sections are executed in the system.
